# EUROPÄISCHE PATENTANMELDUNG

(11) **EP 2 617 554 A1**
(43) Veröffentlichungstag der Anmeldung: **24.07.2013**
(21) Anmeldenummer: 13000203.3
(22) Anmeldetag: 15.01.2013
(51) Int. Cl.: B29C 67/00

(54) **Vorrichtung zur Erzeugung von dreidimensionalen Objekten**

(30) Priorität: 17.01.2012 DE 102012000664
(71) Anmelder: Okka, Hakan, 51103 Köln (DE); Jovanovic, Mirjana, 51103 Köln (DE)
(72) Erfinder: Okka, Hakan, 51103 Köln (DE); Jovanovic, Mirjana, 51103 Köln (DE)
(74) Vertreter: Hübsch, Dirk

(57) **Zusammenfassung**

Die Erfindung betrifft eine Vorrichtung (1) zum Erzeugen von dreidimensionalen Objekten, mit einem Träger (2), mit einer Bearbeitungsvorrichtung (5), insbesondere mit einem Extruder (6) zur Abgabe eines Materials, und mit einem Antriebssystem (10), wobei das Antriebssystem (10) mehrere Antriebsmotoren (11) aufweist, wobei der Träger (2) und die Bearbeitungsvorrichtung (5) mittels des Antriebssystems (10) in drei Bewegungsrichtungen relativ zueinander bewegbar sind, wobei mit der Bearbeitungsvorrichtung (5) auf dem Träger (2) das dreidimensionale Objekt erzeugbar ist, wobei zur Ausführung der Relativbewegung in mindestens einer der Bewegungsrichtungen mehrere Antriebsmotoren (11) vorgesehen sind, wobei das Antriebssystem (10) einen Hubmechanismus (20) zum Anheben und/oder Absenken der Bearbeitungsvorrichtung (5), insbesondere des Extruders (6), aufweist.

Eine einfache Montage und Justierbarkeit bei zugleich günstigen Herstellungskosten wird dadurch erzielt, dass zur Bewegung des Trägers (2) in zwei Bewegungsrichtungen jeweils mindestens zwei Antriebsmotoren (11) vorgesehen sind, so dass insgesamt mindestens vier Antriebsmotoren (11) zur Bewegung des Trägers (2) vorgesehen sind, wobei der Hubmechanismus (20) einen Hubschlitten (24) aufweist, wobei der Hubschlitten (24) an einer Führungsschiene (22, 23), insbesondere an zwei Führungsschienen (22, 23) geführt ist, wobei der Hubschlitten (24) über ein Umlenkmittel (27) mit mindestens einem Gegengewicht (25) verbunden ist, so dass das Eigengewicht des Hubschlittens (24) einschließlich der Bearbeitungsvorrichtung (15) zumindest teilweise entlastet ist.

## Beschreibung

Die Erfindung betrifft eine Vorrichtung zum Erzeugen von dreidimensionalen Objekten, mit einem Träger, mit einer Bearbeitungsvorrichtung, insbesondere mit einem Extruder zur Abgabe eines Materials, und mit einem Antriebssystem, wobei das Antriebssystem mehrere Antriebsmotoren aufweist, wobei der Träger und die Bearbeitungsvorrichtung mittels des Antriebssystems in drei Bewegungsrichtungen relativ zueinander bewegbar sind, wobei mit der Bearbeitungsvorrichtung auf dem Träger das dreidimensionale Objekt erzeugbar ist, wobei zur Ausführung der Relativbewegung in mindestens einer der Bewegungsrichtungen mehrere Antriebsmotoren vorgesehen sind, wobei das Antriebssystem einen Hubmechanismus zum Anheben und/oder Absenken der Bearbeitungsvorrichtung, insbesondere des Extruders, aufweist.

Solche Vorrichtungen werden als 3D-Drucker oder "Digital Fabricator" oder in Kurzform als "Fabber" bezeichnet. Mit Hilfe dieser Vorrichtungen können materielle, dreidimensionale Objekte aus CAD-Daten erzeugt werden. Die CAD-Daten sind dabei auf einem Computer gespeichert und werden über entsprechende Programme und Schnittstellen derart an das Antriebssystem übermittelt, so dass das Objekt insbesondere schichtweise durch Abgabe von Material aufgebaut werden kann. Die Bearbeitungsvorrichtung gibt dabei in besonders bevorzugter Ausgestaltung ein Material ab und baut so das Objekt auf. Diese Vorrichtungen werden als additive Fabber bezeichnet.

Daneben existieren weitere Vorrichtungen zum Erzeugen von dreidimensionalen Objekten, wobei die Bearbeitungsvorrichtung das Objekt aus einem massiven Block durch Abtragen von Material mittels Fräsen, Drehen, oder dergleichen erzeugt. Ferner existieren formende "Fabber", wobei die Bearbeitungsvorrichtung durch Anwendung äußerer Kräfte das gewünschte Objekt formt. Hierbei wird zumeist weder Material entfernt noch hinzugefügt. Eine weitere entsprechende Vorrichtung wird als Stereolithografie-Drucker bezeichnet, wobei die Bearbeitungsvorrichtung einen UV-Lichtstrahl erzeugt, der die Oberfläche eines Kunstharzbades schichtweise erhärtet. Das Kunstharzbad ist dabei auf einem entsprechenden Träger angeordnet. Eine weitere Vorrichtung ist in Form eines Laser-Sinters bekannt, wobei die Bearbeitungsvorrichtung einen Laserstrahl erzeugt. Der Laserstrahl schmilzt in einem Pulverbad ein entsprechendes Material schichtweise zusammen. Ferner sind Kombinationsformen dieser Fabber bekannt.

Aus der US 5,340,433 und der DE 69033899 T2 ist eine Vorrichtung und ein Verfahren zum Erzeugen dreidimensionaler Objekte bekannt. Zur Herstellung des Objektes werden mit der Bearbeitungsvorrichtung mehrere Lagen eines Materials auf dem Träger abgelagert. Das Material ist dabei derart gewählt, dass das Material sich im Wesentlichen sofort nach dem Extrudieren auf dem Träger beim Aufbau der mehreren Lagen verfestigt. Die Bearbeitungsvorrichtung ist als Abgabekopf mit einem Durchflusskanal ausgebildet. Eine Heizvorrichtung am Abgabekopf erhitzt einen flexiblen Materialstrang auf eine vorbestimmte Temperatur oberhalb der Verfestigungstemperatur des Materials. Die Bearbeitungsvorrichtung umfasst ferner einen Vorschubmechanismus, der den flexiblen Strang mit einer kontrollierten Vorschubrate verschiebt, um dadurch die Fließrate des Materials in einen Flüssigkeitsstrom aus der Ausstoßöffnung bezüglich der relativen Bewegung des Abgabekopfes und des Trägers zu regulieren. Das Material wird so in einem fluiden Zustand in sehr dünnen Lagen aufgebracht. Der Abgabekopf, d. h. die Bearbeitungsvorrichtung und der Träger sind über ein Antriebssystem relativ zueinander bewegbar. Der Abgabekopf wird entlang der Z-Achse, d.h. der Hochachse angehoben, um die aufeinanderliegenden Lagen des Materials zu bilden. Die Dicke jeder Lage wird dadurch gesteuert, indem die Lücke zwischen dem Abgabekopf und der vorausgehende Lage reguliert wird. Der Träger ist im Wesentlichen in der horizontalen Ebene, d. h. in Richtung der X- und Y-Achse bewegbar. Die Vorrichtung weist einen ortsfesten Tisch auf, wobei an dem Tisch ein Sockel mit einem Montagearm befestigt ist. Der Montagearm trägt den höheverstellbar angeordneten Abgabekopf. An dem Abgabekopf ist ein Winkel angebracht, wobei ein sich im wesentlichen in horizontaler Richtung erstreckender Schenkel des Winkels eine Öffnung mit einem Gewinde aufweist. Durch dieses Gewinde erstreckt sich eine Antriebsschraube, wobei ein Antriebsmotor die am Montagearm drehbar angebrachte Antriebsschraube antreibt. Durch Betätigung dieses Antriebsmotors kann der Abgabekopf in der Höhe verfahren werden. Auf dem Tisch ist eine Platte als Träger angeordnet. Diese Platte ist in zwei sich senkrecht zueinander erstreckenden Bewegungsrichtungen, d. h. in X- und Y-Richtung verfahrbar. Der Tisch trägt einen geschlitzten Gleiter, wobei in dem Schlitz des Gleiters eine erste Antriebsspindel drehbar gelagert ist. Die Platte bzw. der Träger ist auf dem Gleiter verschiebbar angeordnet. Dabei greift der Träger mit einem Gegengewinde in das Gewinde der Antriebsspindel ein. Der Gleiter weist dabei an einem Ende ein Elektromotor auf, wobei mit dem Elektromotor die Antriebsspindel antreibbar ist. Mit diesem Ende des Gleiters ist zudem die Tischkante umgriffen. Die Tischkante dient als Führung für den Gleiter. Am entgegengesetzten Ende des Gleiters ist ein Antriebsblock ausgebildet, wobei der Antriebsblock eine Öffnung mit einem Innengewinde aufweist. In das Innengewinde greift eine weitere, zweite Antriebsspindel ein, wobei die zweite Antriebsspindel sich im Wesentlichen senkrecht zur ersten Antriebsspindel erstreckt. Diese zweite Antriebsspindel erstreckt sich im Wesentlichen parallel zur vom Gleiter umgriffenen Tischkante. Die zweite Antriebsspindel ist über einen weiteren, zweiten Antriebsmotor antreibbar. Durch Antreiben dieser zweiten Antriebsspindel ist der Träger quer zur ersten Antriebsspindel bewegbar.

Dieses Antriebssystem ist noch nicht optimal ausgebildet. Dadurch, dass der Gleiter an seinem einen Ende an der Tischkante geführt ist und an seinem anderen Ende über den Antriebsblock mittels der zweiten Antriebsschraube angetrieben wird, besteht die Gefahr, dass der Gleiter relativ zur Tischkante verkantet und so eine präzise Positionierung des Trägers relativ zum Abgabekopf verhindert wird. Da der Gleiter den Elektromotor und die erste Antriebsschraube trägt, ist zudem das Gesamtgewicht der zu bewegenden Masse bei einer Bewegung entlang der Richtung der zweiten Antriebsschraube recht hoch. Die Montage und Justierung dieses Antriebssystems ist aufwändig.

Aus der EP 0 421 527 A1 ist eine Positionierungsvorrichtung für einen Tisch einer opto-lithographischen Vorrichtung bekannt. Die Positionierungsvorrichtung weist vier Antriebsspindeln auf, wobei die Antriebsspindeln paarweise parallel zueinander angeordnet sind und auf einer Granitplatte abgestützt sind. Diese vier in X-Richtung und in Y-Richtung angeordneten Antriebsspindeln sind mit jeweils einem Antriebsmotor antreibbar. Zwischen den sich gegenüberliegenden Antriebsspindeln erstrecken sich jeweils zwei Führungsschienen, wobei mittels der Führungsschienen ein Schlitten in der horizontalen Ebene verfahrbar ist. Der Schlitten weist ein Spulensystem zur Erzeugung eines Magnetfeldes auf. Ein Tisch ist mit dem Schlitten nicht mechanisch, sonder über Lorentzkräfte gekoppelt, wobei der Tisch ein Magnetsystem aufweist. Das Magnetsystem und das Spulensystem bilden Linearmotoren, mit denen der Tisch relativ zu dem Schlitten in der XY-Ebene postionierbar ist. Der Schlitten weist die Spulen auf, damit der Tisch nicht erwärmt wird. In der vertikalen Z-Achse ist der Tisch mittels eines statischen Luftlagers positionierbar.

Aus der DE 19524013 C2 und der US 5,503,785 A ist eine Vorrichtung und ein Verfahren zum Herstellen von dreidimensionalen Objekten bekannt. Die Vorrichtung weist als Bearbeitungsvorrichtung einen Abgabekopf auf, wobei der Abgabekopf in einer horizontalen Ebene, d. h. entlang der X- und Y-Achsen verfahrbar ist. Der Abgabekopf ist auf einem Untergestellwagen befestigt, der in X- und in Y-Richtung verfahrbar ist. Hierzu ist der Untergestellwagen durch zwei sich quer zueinander erstreckende Schraubenspindeln mittels entsprechender steuerbaren Motoren, wie z. B. Schrittmotoren verfahrbar. Der Träger ist dabei in vertikaler oder Z-Richtung verfahrbar, um eine Bewegung in den drei Dimensionen zu ermöglichen.

Aus der gattugsbildenden FR 2 583 333 A1 ist eine Vorrichtung zur Erzeugung eines dreidimensionalen Modells bekannt. Die Vorrichtung weist einen plattenförmigen Träger auf, wobei der Träger die Grundfläche eines quaderförmigen Rahmengestells bildet. An den oberen vier Kantenbereichen sind ein Antriebssystem und eine Bearbeitungsvorrichtung mit einer zum Träger weisenden Düse angeordnet. Der Träger ist relativ zum Rahmengestell fest angeordnet. Mittels des Antriebssystems ist die Düse verfahrbar. Das Antriebssystem weist vier Antriebsmotoren auf, wobei drei der Antriebsmotoren jeweils eine Antriebsspindel antreiben. Entlang der Längskantenbereiche erstrecken sich zwei Antriebsspindeln, wobei sich quer zwischen diesen eine weitere, dritte Antriebsspindel erstreckt, wobei an der dritten Antriebsspindel die Düse mit einer Zahnstange höhenverfahrbar angeordnet ist. Zur Ausführung der Bewegung parallel zu den Längskantenbereichen sind damit zwei Antriebsmotoren vorgesehen.

Die eingangs genannten Vorrichtungen sind noch nicht optimal ausgebildet. Die bekannten Antriebssysteme sind aufwändig zu montieren und zu justieren. Ferner besteht die Gefahr, dass die Positionierung der Bearbeitungsvorrichtung und des Trägers relativ zueinander nicht präzise genug ist, oder dass die Genauigkeit der Positionierung nach einiger Betriebszeit der entsprechenden Vorrichtung nachlässt. Es besteht die Gefahr, dass sich die relativ zueinander bewegenden Teile verkanten, verhaken, klemmen, ausleiern oder dergleichen. Wenn bspw. die Motorkraft der Antriebsmotoren durch aufwändige Konstruktion wie Zahnriemen oder Umlenkelemente, Rollen, Achsen usw. übertragen wird, führt dies zu einer unzuverlässigen Konstruktion, da die entsprechenden Bauteile ausleiern, reissen, nachjustiert oder ausgetauscht werden müssen. Zudem sind solche aufwändigen Aufbauten mit entsprechenden Produktionskosten verbunden.

Der Erfindung liegt daher die Aufgabe zugrunde, die eingangs genannte Vorrichtung derart auszugestalten und weiterzubilden, so dass eine einfache Montage und Justierbarkeit bei zugleich günstigen Herstellungskosten erzielt wird.

Diese der Erfindung zugrunde liegende Aufgabe wird nun dadurch gelöst, dass zur Bewegung des Trägers in zwei Bewegungsrichtungen jeweils mindestens zwei Antriebsmotoren vorgesehen sind, so dass insgesamt mindestens vier Antriebsmotoren zur Bewegung des Trägers vorgesehen sind, wobei der Hubmechanismus einen Hubschlitten aufweist, wobei der Hubschlitten an einer Führungsschiene, insbesondere an zwei Führungsschienen geführt ist, wobei der Hubschlitten über ein Umlenkmittel mit mindestens einem Gegengewicht verbunden ist, so dass das Eigengewicht des Hubschlittens einschließlich der Bearbeitungsvorrichtung zumindest teilweise entlastet ist. Zur Ausführung der Bewegung des Trägers sind jeweils zwei Antriebsmotoren für jede der beiden Bewegungsrichtungen vorgesehen. Das heißt, es sind zur Bewegung des Trägers insgesamt vier Antriebsmotoren vorgesehen sind, wobei der Träger, insbesondere in der horizontalen Ebene in jeder der beiden unabhängigen Bewegungsrichtungen durch zumindest ein Paar von Antriebsmotoren bewegbar ist. Zwei dieser Antriebsmotoren sind dabei zur Bewegung entlang der X-Achse und zwei der Antriebsmotoren sind zur Bewegung entlang der Y-Achse vorgesehen. Die X-Achse und die Y-Achse erstrecken sich senkrecht zueinander in der horizontalen Ebene. Eine Z-Achse erstreckt sich vertikal- Die Rotation der Antriebswellen der Antriebsmotoren wird vorzugsweise durch eine Zahnrad- und Zahnstangenkombination direkt in die Bewegung des Trägers umgesetzt. Da es zwischen der Rotation der Antriebswellen bzw. den zugeordneten Zahnrädern und den Zahnstangen keine Umwege durch Rollen, Riemen oder dergleichen gibt, führt dies dazu, dass eine hohe Präzision, ein hoher Wirkungsgrad und somit ein wartungsfreies Antriebssystem bereitgestellt ist. Dadurch, dass zwei Antriebsmotoren für jede Bewegungsrichtung vorgesehen sind, ist zum einen die Ausfallsicherheit erhöht und zum anderen ist die Gefahr verringert, dass sich beim Verfahren des Trägers der Träger verkantet. Die Antriebsmotoren wirken insbesondere beidseitig auf den Träger ein. Die Antriebsmotoren treiben zur Bewegung des Trägers jeweils ein Zahnrad an. Das Zahnrad steht im Eingriff mit einer zugeordneten Zahnstange. Die einer Bewegungsrichtung des Trägers zugeordneten Zahnstangen, d. h. die beiden Zahnstangen sind vzw. jeweils über eine Führungsschiene miteinander verbunden. Der Träger ist dabei funktional wirksam mit einem Schlitten verbunden, wobei der Schlitten verschiebbar an den sich quer zueinander erstreckenden Führungsschienen geführt ist. Zur Bewegung des Trägers sind daher insgesamt vier Zahnstangen vorgesehen. Jeweils sich gegenüberliegende Zahnstangen erstrecken sich parallel zueinander. Die so gebildeten (Zahnstangen-)Paare erstrecken sich senkrecht zueinander. Zur Bewegung jeder der Zahnstangen ist ein zugeordneter Antriebsmotor vorgesehen. Diese Antriebsmotoren sind insbesondere als Schrittmotoren ausgebildet. Die sich paarweise zueinander parallel erstreckenden Zahnstangen sind über jeweils mindestens eine Führungsschiene miteinander verbunden. Es ist auch denkbar, dass die Zahnstangenpaare jeweils über mehrere Führungsschienen miteinander verbunden sind. Die zu unterschiedlichen Paaren von Zahnstangen gehörigen Führungsschienen erstrecken sich quer zueinander und kreuzen sich. Im Bereich der sich kreuzenden Führungsschienen ist der Schlitten angeordnet. Der Schlitten kann dazu entsprechende Führungsaufnahmen in Höhe der jeweiligen zugeordneten Führungsschienen aufweisen, wobei sich die Führungsschienen innerhalb der Führungsaufnahmen erstrecken. Werden nun die Zahnstangenpaare in gleicher Richtung und in gleicher Geschwindigkeit verfahren, so wird der Schlitten entsprechend an der dem anderen Zahnstangenpaar zugeordneten Führungsschiene verschoben. Hierdurch ist eine einfache, wartungsfreundliche, präzise Bewegung des Trägers ermöglicht. Die Antriebsmotoren eines Paares sind dabei jeweils umgekehrt gepolt angeschlossen, so dass sich die Zahnstangen eines zugeordneten Paares beim Betrieb gleichgerichtet bewegen. Das Antriebssystem weist insbesondere einen Hubmechanismus zur Bewegung der Bearbeitungsvorrichtung auf. Der Hubmechanismus ist in besonders bevorzugter Ausgestaltung ebenfalls mit mindestens einem Antriebsmotor und einer zugehörigen Zahnstange ausgestattet. Der Hubmechanismus ist an mindestens einer aufragenden Führungsschiene, insbesondere an mehreren aufragenden Führungsschienen, insbesondere an zwei Führungsschienen höhenverstellbar geführt. Als Antriebsmotor kommt dabei vzw. ein Schrittmotor zum Einsatz. Auch hierbei wird die Rotation der Motorwellen durch die Zahnrad-Zahnstangen-Kombination direkt auf die translatorische Bewegung in der Z-Achse übertragen. Durch diese Antriebsmotor-Zahnstangenpaarung wird eine hohe Präzision, ein hoher Wirkungsgrad, eine leichte Montage und eine Wartungsfreiheit erreicht. Die Beanspruchung des Antriebsmotors des Hubmechanismus ist durch Gegengewichte entlastet, wobei die Gegengewichte über entsprechende Umlenkmittel mit dem Hubmechanismus funktional wirksam verbunden sind. Die Gegengewichte können an Führungsschienen geführt sein. Dies hat den Vorteil, dass der Antriebsmotor des Hubmechanismus im Wesentlichen nur zur Positionierung verwendet wird und nicht der vollen Gewichtskraft des Hubmechanismus entgegenwirken muss. Hierdurch ist der Antriebsmotor des Hubmechanismus entlastet, was die Lebensdauer erhöht. Wenn das Antriebssystem abgeschaltet wird, fällt die Bearbeitungsvorrichtung durch ihr Eigengewicht nicht auf den Träger herab. Ein weiterer Vorteil der Vorrichtung besteht darin, dass die Vorrichtung eine Tragkonstruktion aufweist, die preiswert herzustellen und einfach zu montieren ist. Die Tragkonstruktion bildet im Wesentlichen ein Gehäuse bzw. ein Gestell zur Halterung des Antriebssystems. Die Tragkonstruktion weist mehrere Profilstücke auf, wobei die Profilstücke vzw. über eine Steckverbindung miteinander verbindbar sind. Dies hat den Vorteil, dass keine Schrauben oder dergleichen verwendet werden müssen, um die Vorrichtung aufzubauen. Der Aufbau der Vorrichtung kann in wenigen Handgriffen geschehen. Die Profilstücke können über entsprechende Verbindungselemente miteinander verbunden sein, die insbesondere aus Kunststoff gefertigt sind. Ersatzteile der Verbindungselemente können mit der Vorrichtung selbst hergestellt werden. Die Profilstücke können als Vierkantprofile ausgebildet sein. Die eingangs genannten Nachteile sind daher vermieden und entsprechende Vorteile sind erzielt.

Es gibt nun eine Vielzahl von Möglichkeiten, die erfindungsgemäße Vorrichtung in vorteilhafter Art und Weise auszugestalten und weiterzubilden. Hierzu darf zunächst auf die dem Patentanspruch 1 nachgeordneten Patentansprüche verwiesen werden. Im Folgenden wird nun eine bevorzugte Ausgestaltung der Vorrichtung anhand der Zeichnung und der dazugehörigen Beschreibung näher erläutert. In der Zeichnung zeigt:
- Fig. 1: in einer schematischen, perspektivischen Darstellung eine Vorrichtung zum Erzeugen von dreidimensionalen Objekten von schräg oben links,
- Fig. 2: in einer schematischen, perspektivischen Darstellung die Vorrichtung von schräg oben rechts,
- Fig. 3: in einer schematischen Frontansicht die Vorrichtung,
- Fig. 4: in einer schematischen Seitenansicht die Vorrichtung von rechts,
- Fig. 5a: in einer schematischen Seitenansicht die Vorrichtung von links,
- Fig. 5b: in einer schematischen Detaildarstellung das Detail Y gemäß Fig. 5a der Vorrichtung, nämlich einen Träger, auf dem das dreidimensionale Objekt erzeugt wird,
- Fig. 5c: in einer schematischen, perspektivischen Detaildarstellung den Träger schräg von unten,
- Fig. 6: in einer schematischen Rückansicht die Vorrichtung,
- Fig. 7a: in einer schematischen, vertikal geschnittenen Darstellung die Vorrichtung geschnitten entlang der Ebene E-E gemäß Fig. 6,
- Fig. 7b: in einer schematischen, geschnittenen Detaildarstellung einen Teil einer Bearbeitungsvorrichtung, nämlich das Detail Z gemäß Fig. 7a,
- Fig. 8: in einer schematischen, horizontal geschnittenen Darstellung die Vorrichtung geschnitten entlang der Ebene A-A gemäß Fig. 3,
- Fig. 9: in einer schematischen, horizontal geschnittenen Darstellung die Vorrichtung geschnitten entlang der Ebene B-B gemäß Fig. 3,
- Fig. 10: in einer schematischen, horizontal geschnittenen Darstellung die Vorrichtung geschnitten entlang der Ebene C-C gemäß Fig. 3,
- Fig. 11: in einer schematischen, geschnittenen Darstellung die Vorrichtung geschnitten entlang der Ebene E-E gemäß Fig. 3, und
- Fig. 12: in einer schematischen, perspektivischen Darstellung einen Teil eines Antriebssystems der Vorrichtung, nämlich zwei parallel zueinander angeordnete, über eine Schiene miteinander verbundene Zahnstangen.

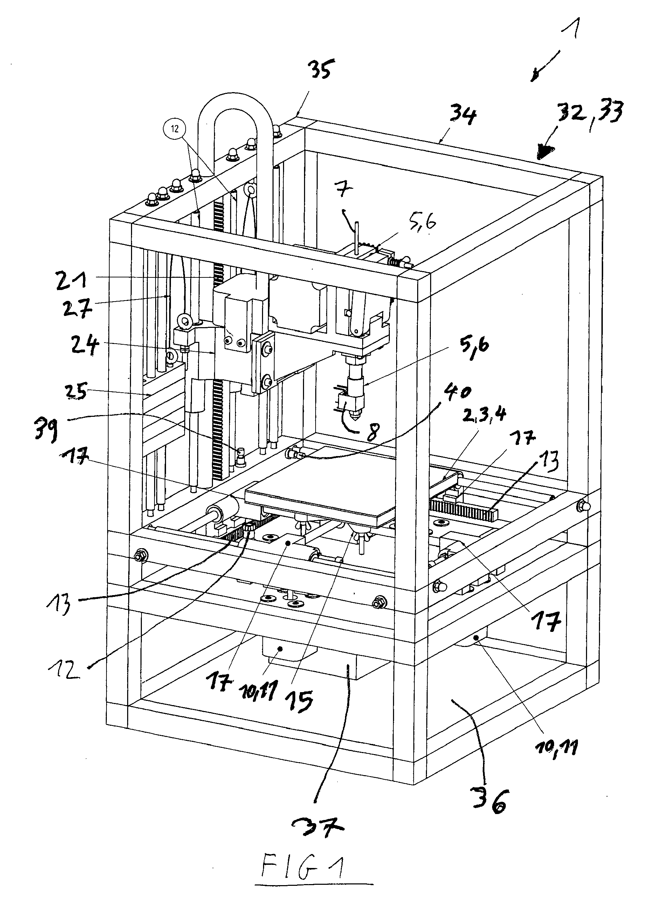

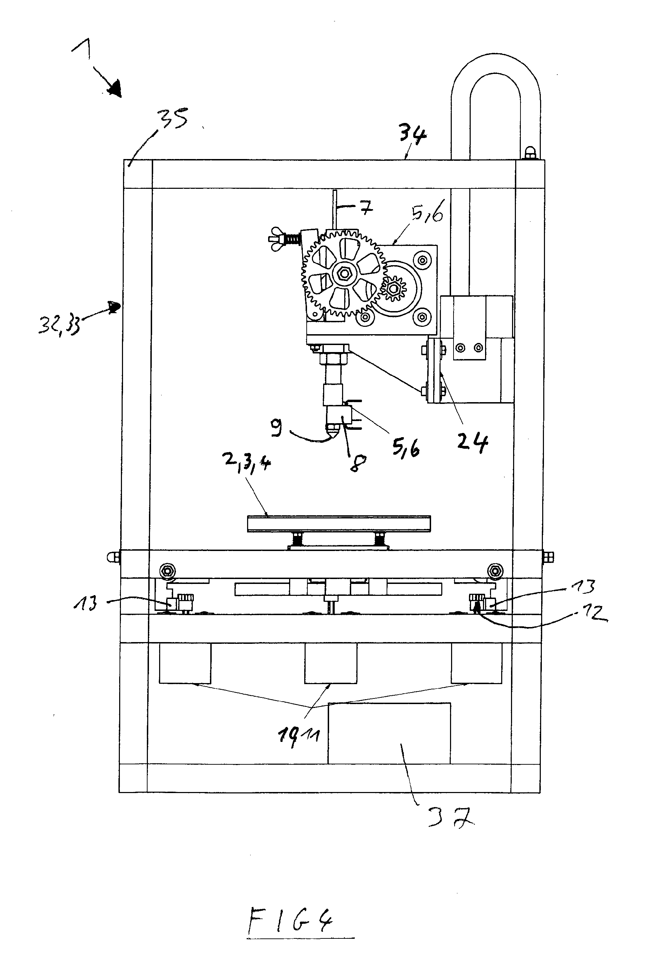

In den Fig. 1 bis 7a ist eine Vorrichtung 1 zum Erzeugen von dreidimensionalen Objekten (nicht dargestellt) gut zu erkennen.

Solche Vorrichtungen 1 werden auch als "Digital Fabricator" oder kurz "Fabber" oder "3D-Drucker" bezeichnet. Bei der dargestellten Vorrichtung 1 handelt es sich um einen additiven Fabber. Das Objekt wird durch sukzessives Hinzufügen von Material 7 erzeugt. Diese Vorrichtung 1 wird von einem Computer, insbesondere einem Personal-Computer gesteuert. Die Vorrichtung 1 kann bspw. neben einem Schreibtisch mit einem entsprechenden Computer gestellt werden, um dreidimensionale Objekte zu erzeugen. Die Daten des Objektes sind dabei mit dem Personal Computer, z. B. mittels eines CAD-Programms erzeugt worden und gespeichert. Solche Vorrichtungen 1 bzw. 3D-Drucker eignen sich insbesondere dazu, komplizierte Objekte in kleiner Stückzahl herzustellen. Die Vorrichtung 1 arbeitet präzise und ist preisgünstig herzustellen, was in der nachfolgenden Beschreibung näher erläutert werden darf.

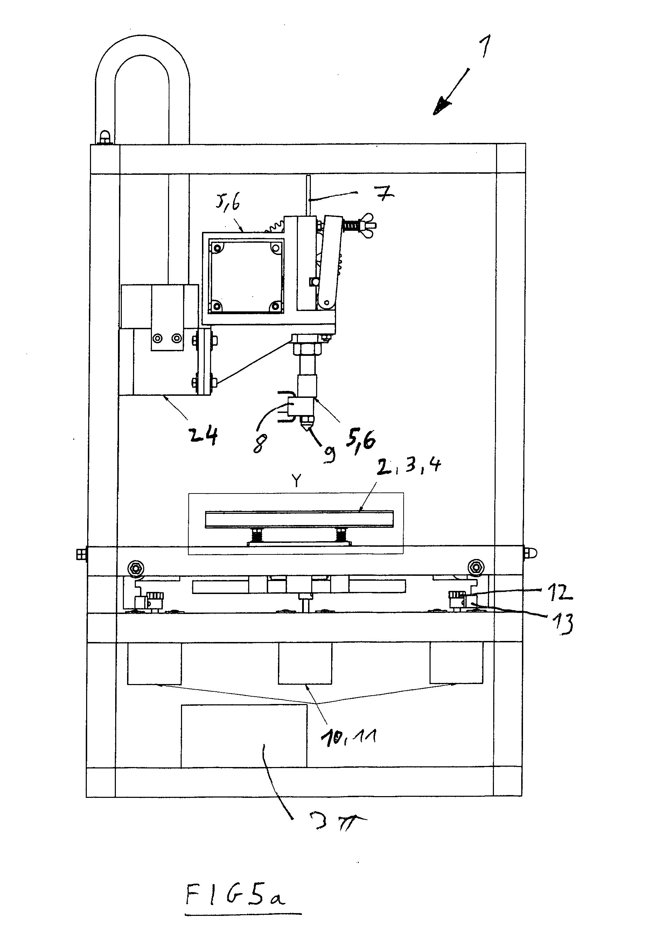

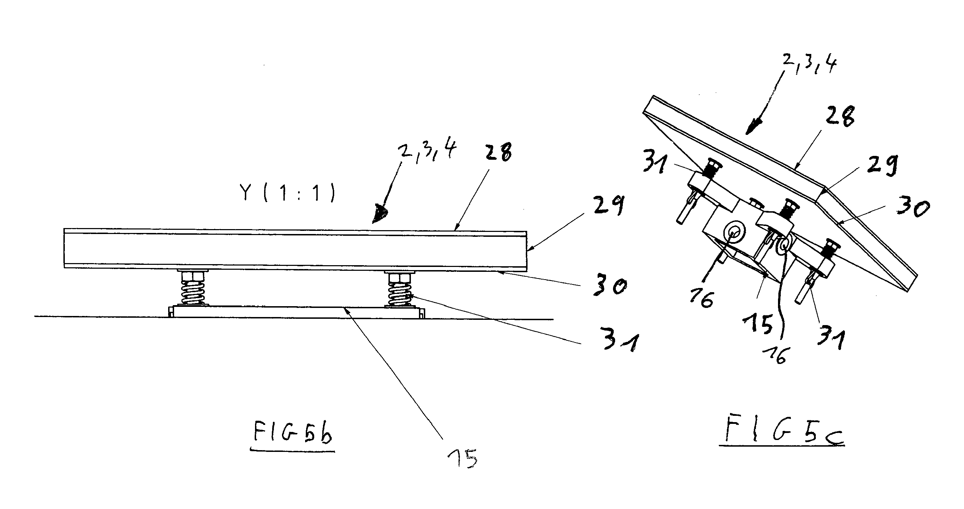

Die Vorrichtung 1 weist einen Träger 2 auf. Der Träger 2 nimmt das Objekt auf. Das Objekt entsteht auf dem Träger 2. Der Träger 2 weist hierzu eine Platte 3 auf. Der Träger 2 mit der Platte 3 kann auch als Tisch 4 bezeichnet werden (vgl. Fig. 5a, 5b, 5c). In bevorzugter Ausgestaltung weist der Tisch 4 eine ebene Oberseite auf. In alternativer Ausgestaltung kann der Tisch 4 jedoch auch eine anders geformte Oberseite aufweisen.

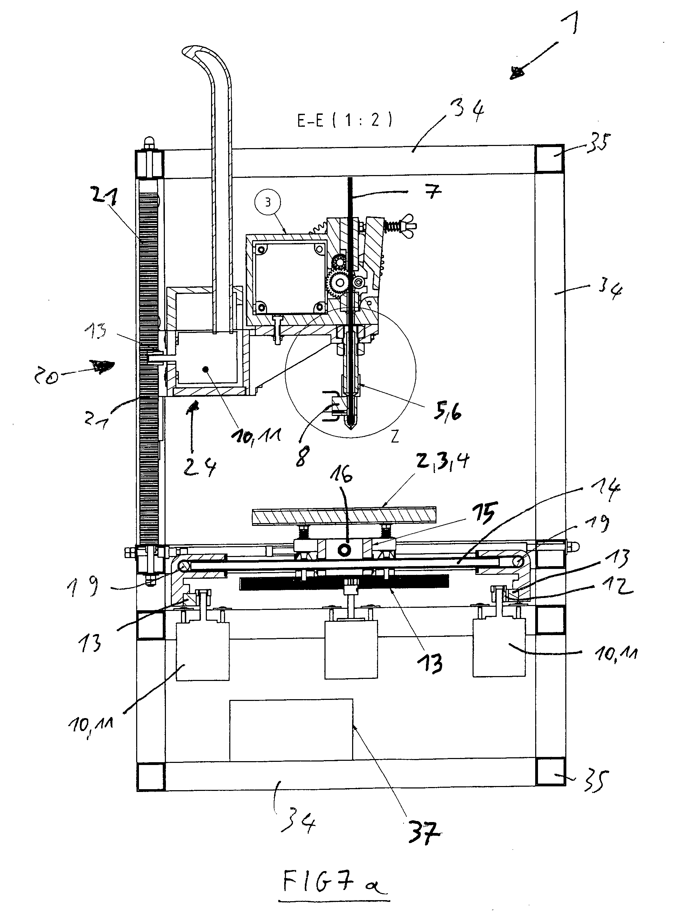

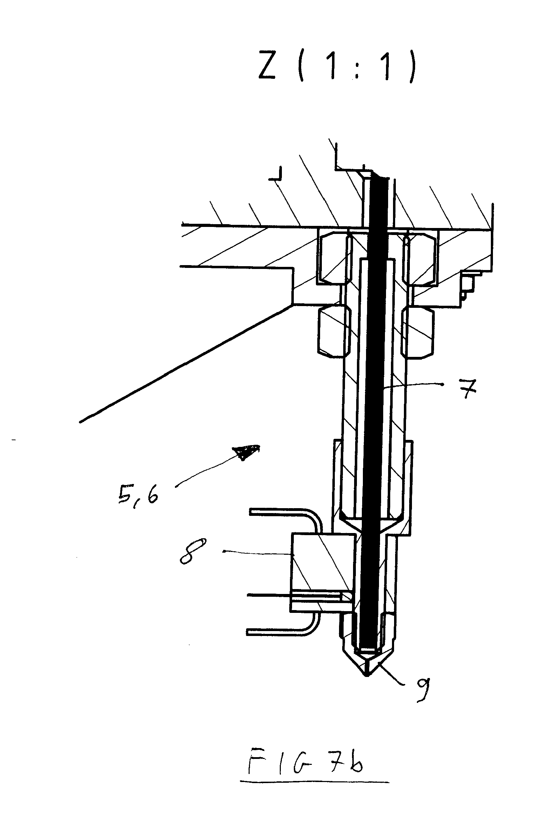

Die Vorrichtung 1 weist ferner eine Bearbeitungsvorrichtung 5, insbesondere einen Extruder 6 zur Abgabe eines Materials 7 auf. Die Bearbeitungsvorrichtung 5 dient zur Erzeugung des Objektes auf dem Träger 2. In besonders bevorzugter Ausgestaltung ist die Bearbeitungsvorrichtung 5 als Extruder 6 ausgebildet, wobei der Extruder 6 zur Abgabe des Materials 7 (vgl. Fig. 7a, 7b) ausgebildet ist. Das Material 7 wird in Form eines dünnen, meist etwa 3 mm starken Kunststoffstranges durch den Extruder 6 geführt. Der Extruder 6 weist dabei ein Heizelement 8 auf, wobei das Heizelement 8 das Material 7 innerhalb des Extruders 6 erhitzt und somit zumindest teilverflüssigt. Der Extruder 6 schmilzt das Material 7 und drückt dieses aus einer entsprechenden Düse 9. Die Bearbeitungsvorrichtung 5 dient als Druckvorrichtung. Die Bearbeitungsvorrichtung 5 weist entsprechende Zuführmittel zum Transport des Materials 7 durch den Extruder 6 und damit durch die Düse 9 auf, auf die an dieser Stelle nicht näher eingegangen wird. Es ist denkbar, dass der Extruder 6 als Einfarben-Extruder oder als Mehrfarben-Extruder ausgebildet ist.

Ferner ist ein Antriebssystem 10 vorgesehen. Der Träger 2 und die Bearbeitungsvorrichtung 5 sind mittels des Antriebssystems 10 in drei, unabhängigen Bewegungsrichtungen relativ zueinander bewegbar. Das Antriebssystem 10 weist mehrere Antriebsmotoren 11 auf.

In der dargestellten Ausgestaltung der Vorrichtung 1 ist mit dem Antriebssystem 10 die Bearbeitungsvorrichtung 5, nämlich hier in der Extruder 6 in der Höhe verfahrbar. Mittels des Antriebssystems 10 ist der Extruder 6 in der Z-Achse verfahrbar.

Der Träger 2 ist in einer Ebene, d. h. entlang der X-Achse und der Y-Achse verfahrbar. Der Träger 2 ist im Wesentlichen in der horizontalen Ebene bewegbar. In alternativer Ausgestaltung der Vorrichtung 1 ist es denkbar, dass die Relativbewegung des Trägers 2 und der Bearbeitungsvorrichtung 5 auf andere Weise gelöst ist. Bspw. könnte die Bearbeitungsvorrichtung 5 in einer Ebene, bspw. entlang der X-Achse und der Y-Achse verfahrbar sein und der Träger 2 in der Höhe entlang der Y-Achse verfahrbar sein. Die drei Bewegungsrichtungen sind in bevorzugter Ausgestaltung orthogonal zueinander gewählt. Es ist jedoch auch denkbar, dass zur Ausführung der Relativbewegung Bewegungsrichtungen durch das Antriebssystem 10 vorgegeben sind, die nicht orthogonal zueinander stehen. Das Antriebssystem 10 ist entsprechend in Teilsysteme hier aufgeteilt, wobei jedes Teilsystem einer der Bewegungsrichtungen zugeordnet ist.

Zur Ausführung der Relativbewegung in mindestens einer der Bewegungsrichtungen sind mehrere Antriebsmotoren 11 vorgesehen. Das heißt mindestens einem der Teilsysteme sind mehrere Antriebsmotoren 11, insbesondere zwei Antriebsmotoren 11 zugeordnet.

Das Antriebssystem 10 weist einen Hubmechanismus 20 zum Anheben und/oder Absenken der Bearbeitungsvorrichtung 5, insbesondere des Extruders 6, auf.

Die eingangs genannten Nachteile sind dadurch vermieden, dass zur Bewegung des Trägers 2 in zwei Bewegungsrichtungen jeweils mindestens zwei Antriebsmotoren 11 vorgesehen sind, so dass insgesamt mindestens vier Antriebsmotoren 11 zur Bewegung des Trägers 2 vorgesehen sind, wobei der Hubmechanismus 20 einen Hubschlitten 24 aufweist, wobei der Hubschlitten 24 an einer Führungsschiene 22, 23, insbesondere an zwei Führungsschienen 22, 23 geführt ist, wobei der Hubschlitten 24 über ein Umlenkmittel 27 mit mindestens einem Gegengewicht 25 verbunden ist, so dass das Eigengewicht des Hubschlittens 24 einschließlich der Bearbeitungsvorrichtung 15 zumindest teilweise entlastet ist.

In der dargestellten Ausgestaltung sind zur Bewegung des Trägers 2 in der Ebene insgesamt vier Antriebsmotoren 11 vorgesehen. Zur Bewegung des Trägers 2 in den beiden Bewegungsrichtungen sind jeweils mindestens zwei Antriebsmotoren 11 vorgesehen, d. h. insgesamt sind mindestens vier Antriebsmotoren 11 zur Bewegung des Trägers 2 vorgesehen. Zwei dieser Antriebsmotoren 11 sind dabei zur Bewegung entlang der X-Achse und zwei der Antriebsmotoren 11 sind zur Bewegung entlang der Y-Achse vorgesehen. Die X-Achse und die Y-Achse erstrecken sich senkrecht zueinander in der horizontalen Ebene. Dies hat den Vorteil, dass eine besonders präzise Positionierung des Trägers 2 in der Ebene möglich ist. Zudem kann hierdurch auf aufwändige Konstruktionen wie Zahnriemen und diverse Umlenkelemente in besonders bevorzugter Ausgestaltung verzichtet werden.

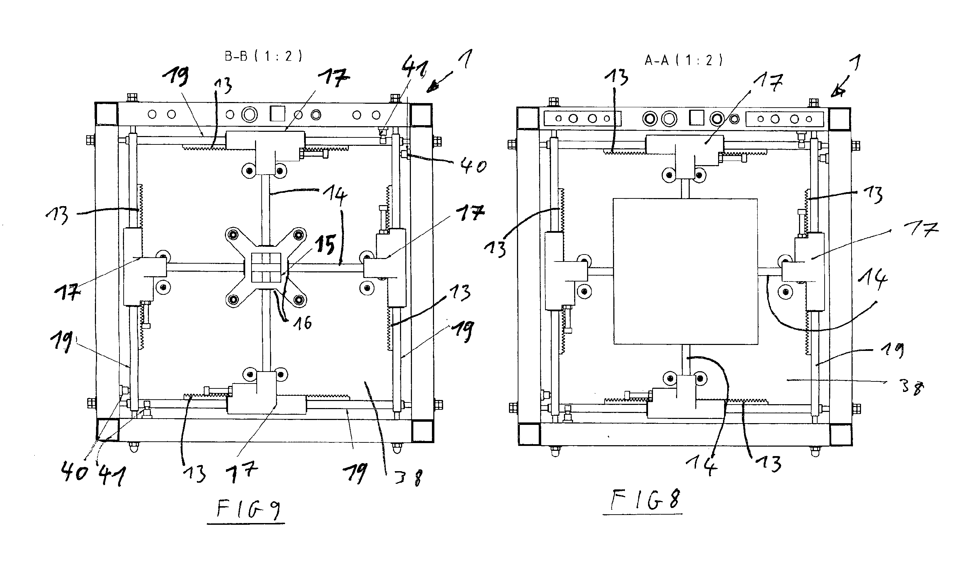

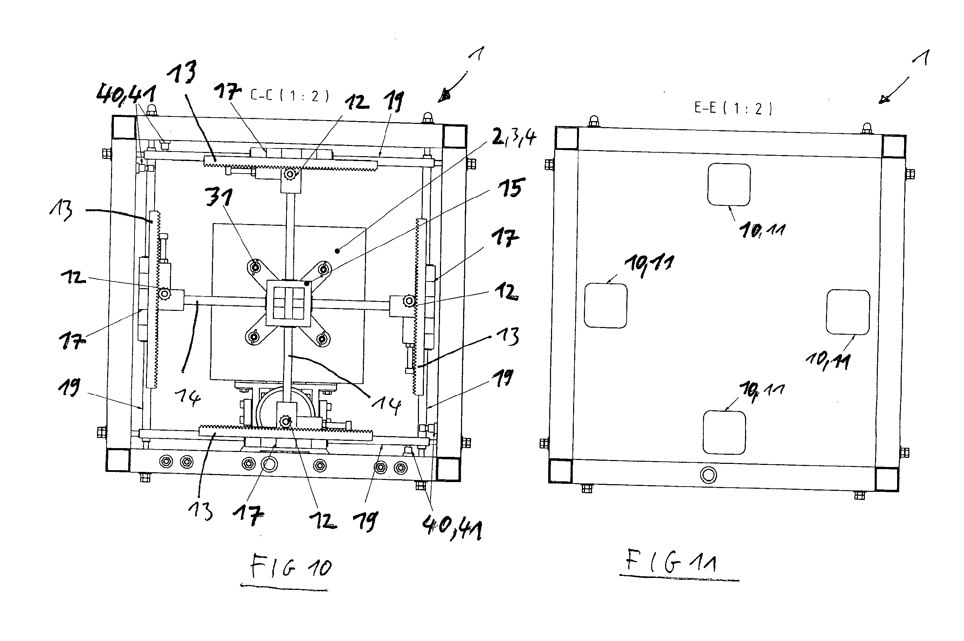

Die Antriebsmotoren 11 zum Antrieb des Trägers 2 wirken in bevorzugter Ausgestaltung über entsprechende Zahnräder 12 auf Zahnstangen 13 ein. Dadurch, dass die Antriebsmotoren 11 direkt auf die Zahnstangen 13 einwirken, ist eine präzise Positionierung des Trägers 2 ermöglicht und ein hoher Wartungsaufwand vermieden. Die Antriebsmotoren 11 treiben zur Bewegung des Trägers 2 jeweils ein Zahnrad 12 an, wobei das Zahnrad 12 im Eingriff mit einer Zahnstange 13 steht. Die jeweils einer Bewegungsrichtung zugeordneten Zahnstangen 13 sind über eine Führungsschiene 14 miteinander verbunden (vgl. Fig. 9, 10, 12). Der Träger 2 ist funktional wirksam mit einem Schlitten 15 verbunden (vgl. Fig. 5c, 7a, 9), wobei der Schlitten 15 an den beiden sich quer zueinander erstreckenden Führungsschienen 14 geführt ist. Die jeweils den sich gegenüberliegenden Zahnstangen 13 zugeordneten Antriebsmotoren 11 sind dabei gegenpolig angeschlossen, so dass die Zahnstangen 13 sich beim Anliegen einer entsprechenden Spannung gleichgerichtet bewegen. Wird nun eine der Führungsschienen 14 durch die entsprechenden sich quer erstreckenden Zahnstangen 13 quer verschoben, so wird der Schlitten 15 längs der anderen Führungsschiene 14 verschoben. Die Führungsschienen 14 kreuzen sich im Bereich des Schlittens 15. Der Schlitten 15 weist Führungsaufnahmen 16 auf, wobei die Führungsaufnahmen 16 sich quer zueinander erstrecken. Die Führungsaufnahmen 16 sind von den Führungsschienen 14 durchgriffen.

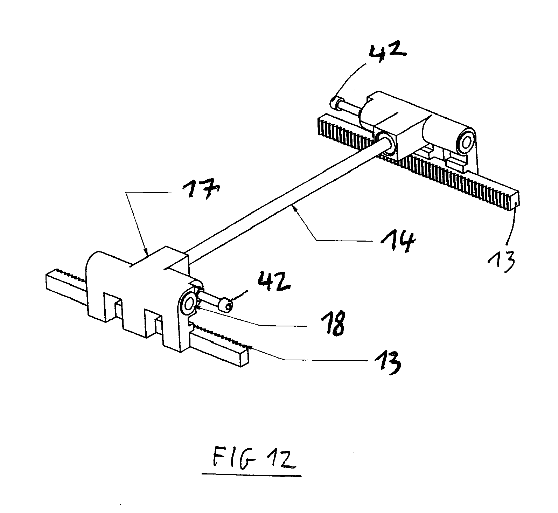

Das jeweils einer Bewegungsrichtung zugeordnete Paar von Zahnstangen 13 erstreckt sich parallel zueinander. Die Führungsschiene 14 erstreckt sich im Wesentlichen senkrecht zwischen diesen einer Bewegungsrichtung zugeordneten Zahnstangen 13 (vgl. Fig. 12). Es ist denkbar, dass einer Bewegungsrichtung mehrere Führungsschienen 14 oder nur eine Führungsschiene 14, wie dargestellt zugeordnet sind/ist. Die Zahnstangen 13 sind mit den Führungsschienen 14 vzw. über Lagergehäuse 17 miteinander verbunden. Das Lagergehäuse 17 weist mindestens ein Lager (nicht näher bezeichnet) auf. Vorzugsweise sind mehrere Lager, insbesondere zwei Lager bzw. ein Lagerpaar vorgesehen. Als Lager kann ein Gleitlager 18 oder alternativ ein Linearlager (nicht näher bezeichnet) verwendet werden. Das jeweilige Lagergehäuse 17 weist mindestens ein Gleitlager 18 auf, wobei das Gleitlager 18 sich im Wesentlichen in Richtung der zugeordneten Zahnstange 13 erstreckt und an einer Gleitschiene 19 geführt ist. In der dargestellten Ausgestaltung sind pro Lagergehäuse 17 zwei Gleitlager 18 vorgesehen. Die Gleitschienen 19 sind ortsfest angeordnet. Die Lagergehäuse 17 gleiten entlang der Gleitschienen 19 bei einer Bewegung des Trägers 2. Es sind hier vier Gleitschienen 19 vorgesehen.

Die Gleitschienen 19 erstrecken sich parallel zu der jeweiligen zugeordneten Zahnstange 13. Dadurch, dass die Zahnstangen 13 über die Lagergehäuse 17 an den Gleitschienen 19 geführt sind, ergibt sich ein wartungsfreundlicher Aufbau, der eine hohe Präzision bei der Positionierung des Trägers 2 ermöglicht. Ein Verklemmen, Verkanten oder dgl. wird durch diesen symmetrischen Aufbau des Antriebssystems 10 vermieden.

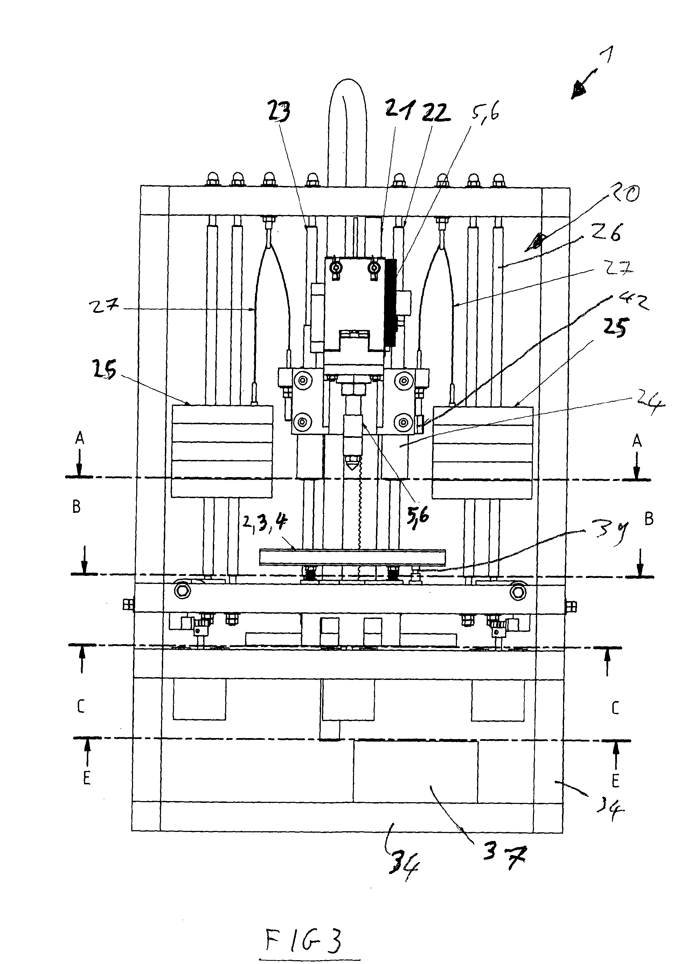

Im Folgenden darf auf den Hubmechanismus 20 zum Anheben und Absenken der Bearbeitungsvorrichtung 5 näher eingegangen werden. Die Bearbeitungsvorrichtung 5 bzw. der Extruder 6 sind mittels eines Antriebsmotors 11 in der Höhe verfahrbar. Dieser Antriebsmotor 11 ist insbesondere als Schrittmotor ausgebildet. Der Hubmechanismus 20 (vgl. Fig. 3, 6, 7a) weist eine weitere Zahnstange 21 auf. Die Zahnstange 21 ist aufragend angeordnet. Der Hubmechanismus 20 ist dabei derart ausgestaltet, dass die Zahnstange 21 ortsfest angeordnet ist, während der Antriebsmotor 11 zusammen mit der Bearbeitungsvorrichtung 5 in der Höhe verfahrbar ist. Der Hubmechanismus 20 weist ferner mindestens eine Führungsschiene 22, 23, insbesondere zwei Führungsschienen 22, 23 auf. Die Führungsschienen 22, 23 erstrecken sich parallel zur Zahnstange 21.

Der Hubmechanismus 20 weist einen Hubschlitten 24 auf, wobei der Hubschlitten 24 in der Höhe verfahrbar ist. Der Hubschlitten 24 trägt den Antriebsmotor 11. Der Hubschlitten 24 ist an den beiden Führungsschienen 22, 23 geführt. Der Antriebsmotor 10 weist ein entsprechendes Ritzel auf und greift mit dem Ritzel direkt in die Zahnstange 21 ein. Dadurch, dass der Hubmechanismus 20 auf Rollen, Riemen und dergleichen verzichtet, werden eine hohe Präzision, ein hoher Wirkungsgrad und eine wartungsfreundlicher Aufbau gewährleistet.

In besonders bevorzugter Ausgestaltung weist der Hubmechanismus 20 mindestens ein Gegengewicht 25 zur Entlastung des Hubschlittens 24 und der Bearbeitungsvorrichtung 5 auf. Das Gegengewicht 25 entlastet den Hubmechanismus 20 vom Gewicht der Bearbeitungsvorrichtung 5. In der dargestellten Ausgestaltung sind jeweils mehrere Gegengewichte 25 jeweils seitlich der Führungsschienen 22, 23 angeordnet. Die Gegengewichte 25 müssen nicht unbedingt auf beiden Seiten der Führungsschienen 22, 23 angeordnet sein. In alternativer Ausgestaltung kann bspw. nur auf einer Seite der Führungsschienen 22, 23 ein Gegengewicht 25 oder mehrere Gegengewichte 25 angeordnet sein. Die Gegengewichte 25 sind an weiteren Führungsschienen 26 geführt. Die Führungsschienen 26 erstrecken sich im Wesentlichen parallel zu den Führungsschienen 22, 23. Die Gegengewichte 25 sind über entsprechende Umlenkmittel 27 mit dem Hubschlitten 24 verbunden. Die Gegengewichte 25 dienen dazu, den Hubmechanismus 20 im Wesentlichen im Gleichgewicht zu halten. Als Umlenkmittel 27 kann eine Schnur, ein Draht, eine Kette oder dergleichen vorgesehen sein, wobei die Schnur oder dergleichen über eine Umlenkrolle (nicht näher dargestellt) oder eine entsprechend angebrachte Öse umgelenkt ist. Wenn nun der Strom abgeschaltet wird, so verhindern die Gegengewichte 25, dass der Hubmechanismus 20 auf die Platte 3 fällt.

Im Folgenden darf nun noch einmal auf die Fig. 5b und 5c näher eingegangen werden. Der Tisch 4 ist in bevorzugter Ausgestaltung beheizbar. Der Tisch 4 ist insbesondere bis ca. 110° Grad beheizbar. Ein entsprechender Heizkreislauf ist hier nicht dargestellt. Die Temperatur des Tisches 4 ist regulierbar. Der Tisch 4 weist eine beheizbare Aluminiumplatte 28 auf. Unter der Aluminiumplatte 28 ist eine Dämmschicht 29 vorgesehen. Die Dämmschicht 29 kann hier als Schaumstoffmatte ausgebildet sein. Die Dämmschicht 29 isoliert die beheizte Aluminiumplatte 28 von der Unterseite. An der Unterseite der Dämmschicht 29 ist eine weitere Aluminiumplatte vorgesehen, die jedoch nicht beheizbar ist. Diese Aluminiumplatte 30 ist mit dem Schlitten 15 verbunden. In alternativer Ausgestaltung können die Aluminiumplatte 28 und die Aluminiumplatte 30 durch Platten aus einem anderen geeigneten Material ersetzt werden. Ferner kann in alternativer Ausgestaltung (nicht dargestellt) auf die Dämmschicht 29 verzichtet werden.

Der Tisch 4 ist mit dem Schlitten 15 über mehrere Positionierungsmittel 31 verbunden. Die Positionierungsmittel 31 dienen dazu, die Höhe des Tisches 4 relativ zum Schlitten 15 einzustellen. Die Positionierungsmittel 31 weisen dazu eine Schraube, insbesondere eine Flügelmutter und jeweils Federmittel auf, die den Tisch 4 nach oben, von dem Schlitten 15 wegdrücken. Auf diese Art und Weise kann der Tisch 4 eben ausgerichtet werden. Die Flügelmuttern können dabei derart verstellt werden, so dass der Tisch 4 entsprechend geneigt wird. Insbesondere sind mindestens drei Positioniermittel 31 vorgesehen.

Die Vorrichtung 1 weist insbesondere eine Tragvorrichtung 32, vzw. ein Gehäuse 33 auf. Das Gehäuse 33 bzw. die Tragvorrichtung 32 trägt den Hubmechanismus 20, den Rest des Antriebssystems 10 einschließlich der Antriebsmotoren 11. Die Tragvorrichtung 32 weist mehrere Profilstücke 34 auf, wobei die Profilstücke 34 über Verbindungselemente 35 miteinander verbunden sind. Die Tragvorrichtung 32 weist hier einen wesentlichen rechteckigen, insbesondere quadratischen Grundriss auf. Entsprechend sind in den vier Ecken jeweils Verbindungselemente 35 angeordnet, die die sich entlang der Kanten erstreckenden Profilstücke 34 miteinander verbinden. Entsprechende aufragende Profilstücke 34 verbinden die unteren Rahmenteile (nicht näher bezeichnet) mit den darüberliegenden Rahmenteilen.

Auf einer Grundplatte 36 ist die Energieversorgung 37 angeordnet. Die Energieversorgung 37 kann ferner eine entsprechende Schnittstelle zum Empfang der Steuerdaten vom Computer und dergleichen enthalten. Darüber ist ein Zwischenboden 38 angeordnet. Der Zwischenboden 38 trägt die dem Träger 2 zugeordneten Antriebsmotoren 11. Oberhalb des Zwischenbodens 38 sind die Führungsschienen 14, die Gleitschienen 19, die Zahnstangen 13 sowie der Schlitten 15 mit dem Träger 2 angeordnet. Die Gleitschienen 19 sind in entsprechenden Profilstücken 34 verankert, insbesondere durch Schraubmittel. Die aufragenden Führungsschienen 22, 23 einschließlich der Zahnstange 21 sowie der Führungsschienen 26 erstrecken sich aufragend von den sich quer erstreckenden Profilstücken 34.

Die Profilstücke 34 können als Vierkantprofile ausgebildet sein. Die Verbindungselemente 35 können als Kunststoffverbindungselemente ausgebildet sein. Für den Zusammenbau der Tragvorrichtung 32 bzw. des Gehäuses 33 werden keine Schraubverbindungen benötigt. Dieses Gehäuse 33 ist preiswert herzustellen und mit nur wenigen Handgriffen montierbar. Es ist möglich, dass der Benutzer der Vorrichtung 1 selber Ersatzteile herstellt, bspw. in Form der entsprechenden Kunststoff-Verbindungselemente 35.

Das Gehäuse 33 kann mehrere Wandteile aufweisen (nicht dargestellt), wobei die Wandteile mit der Tragvorrichtung 32, insbesondere mit den Profilstücken 34 und/oder den Verbindungselementen 35 verbunden sind. Die Wandteile können insbesondere als Scheiben ausgebildet sein. Die Wandteile begrenzen einen nicht näheren bezeichneten Innenraum mit dem Träger 2 und dem Antriebssystem 10. Das Gehäuse 33 kann an einer Seite eine Tür oder eine Klappe (nicht dargestellt) aufweisen, um Zugriff auf den Träger 2 zu bieten. Die Tür kann als Schiebetür ausgebildet sein.

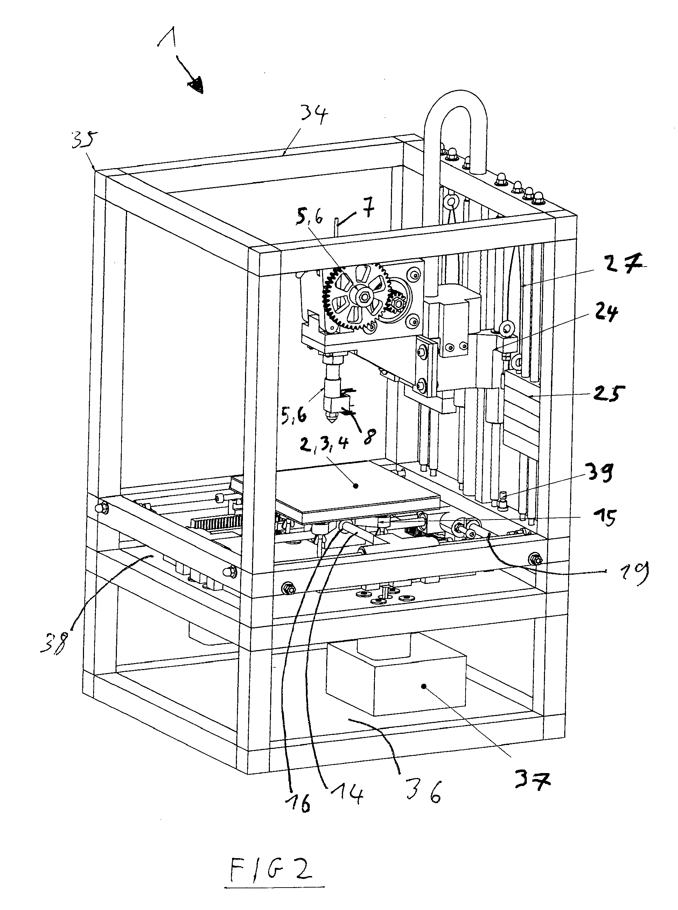

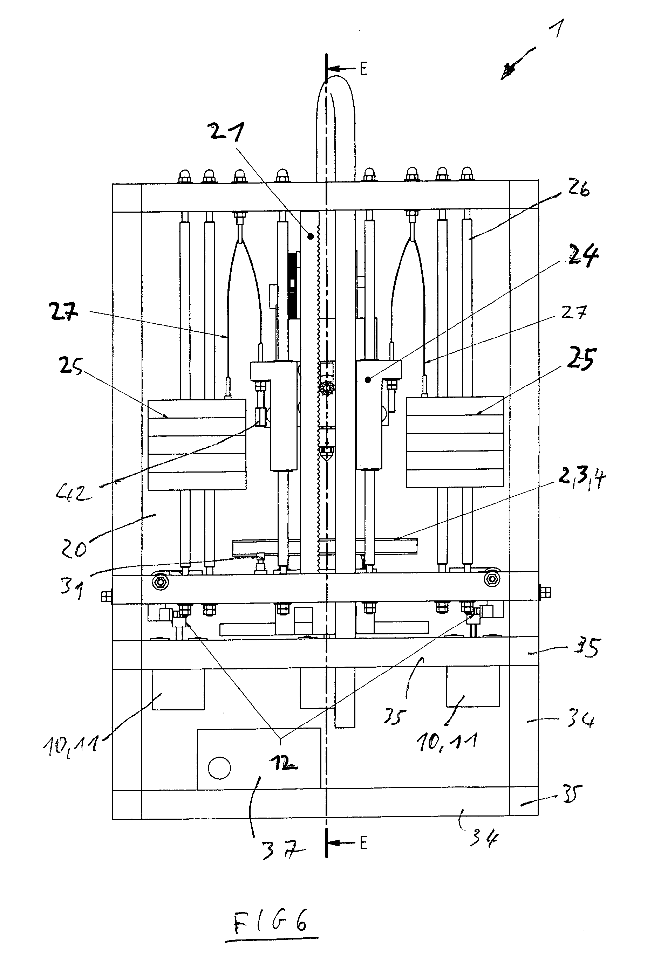

Die Vorrichtung 1 wird vzw. wie folgt gesteuert bzw. geregelt. Das Antriebssystem ist derart ausgestaltet, dass insbesondere mindestens einer Bewegungsrichtung ein Endschalter 39, 40, 41 zugeordnet ist. Vzw. sind mehreren der drei Bewegungsrichtungen Endschalter 39, 40, 41 zugeordnet. Insbesondere ist jeder Bewegungsrichtung ein Endschalter 39, 40, 41 zugeordnet. Die Endschalter 39, 40, 41 sind insbesondere an dem Gehäuse 33 bzw. der Tragvorrichtung 32 montiert. Der Endschalter 39 (vgl. Fig. 2) ist der Hubbewegung daher dem Hubmechanismus 20 zugeordnet. Entsprechende Endschalter 40,41 sind den Tisch-Bewegungsrichtungen zugeordnet (vgl. Fig. 8, 9, 10). Auf eine Positionserfassung kann hierdurch verzichtet werden. Das Antriebssystem 10 bewegt sich selbsttätig nach dem Einschalten der Vorrichtung 1 zu der Zielposition, wobei in der Zielposition der jeweilige Endschalter 39, 40 angebracht ist. Durch die Betätigung der Endschalter wird das Antriebssystem 10 vzw. abgeschaltet. Hierdurch ist die Start- bzw. Zielposition des Trägers 2 und des Hubmechanismus 20 vorgegeben. Wie in Fig. 12 gut zu erkennen ist, trägt das Lagergehäuse 17 jeweils eine Betätigungsvorrichtung 42 insbesondere in Form einer Stellschraube zur Betätigung der zugeordneten Endschalter 40 bzw. 41. Die Startposition bzw. die Zielposition kann hierbei dadurch eingestellt werden, dass die Betätigungsvorrichtung 42 relativ zum Lagergehäuse 17 justiert wird. Hierzu kann die Stellschraube in das Lagergehäuse 17 weiter ein- oder ausgeschraubt werden. Eine entsprechende Betätigungsvorrichtung 42 ist ebenfalls am Hubschlitten 24 angebracht (vgl. Fig. 3 und 6). Durch dieses einfache Steuer- bzw. Regelungskonzept ist die Vorrichtung 1 präzise positionierbar, justierbar und kostengünstig herstellbar.

Die eingangs genannten Nachteile sind daher vermieden und entsprechende Vorteile sind erzielt.

### Bezugszeichenliste:

- 1: Vorrichtung
- 2: Träger
- 3: Platte
- 4: Tisch
- 5: Bearbeitungsvorrichtung
- 6: Extruder
- 7: Material
- 8: Heizelement
- 9: Düse
- 10: Antriebssystem
- 11: Antriebsmotor
- 12: Zahnrad
- 13: Zahnstange
- 14: Führungsschiene
- 15: Schlitten
- 16: Führungsaufnahme
- 17: Lagergehäuse
- 18: Gleitlager
- 19: Gleitschiene
- 20: Hubmechanismus
- 21: Zahnstange
- 22: Führungsschiene
- 23: Führungsschiene
- 24: Hubschlitten
- 25: Gegengewicht
- 26: Führungsschiene
- 27: Umlenkmittel
- 28: Aluminiumplatte
- 29: Dämmschicht
- 30: Aluminiumplatte
- 31: Positioniermittel
- 32: Tragvorrichtung
- 33: Gehäuse
- 34: Profilstück
- 35: Verbindungselement
- 36: Grundplatte
- 37: Energieversorgung
- 38: Zwischenboden
- 39: Endschalter
- 40: Endschalter
- 41: Endschalter
- 42: Betätigungsvorrichtung

## Patentansprüche

**1.** Vorrichtung (1) zum Erzeugen von dreidimensionalen Objekten, mit einem Träger (2), mit einer Bearbeitungsvorrichtung (5), insbesondere mit einem Extruder (6) zur Abgabe eines Materials, und mit einem Antriebssystem (10), wobei das Antriebssystem (10) mehrere Antriebsmotoren (11) aufweist, wobei der Träger (2) und die Bearbeitungsvorrichtung (5) mittels des Antriebssystems (10) in drei Bewegungsrichtungen relativ zueinander bewegbar sind, wobei mit der Bearbeitungsvorrichtung (5) auf dem Träger (2) das dreidimensionale Objekt erzeugbar ist, wobei zur Ausführung der Relativbewegung in mindestens einer der Bewegungsrichtungen mehrere Antriebsmotoren (11) vorgesehen sind, wobei das Antriebssystem (10) einen Hubmechanismus (20) zum Anheben und/oder Absenken der Bearbeitungsvorrichtung (5), insbesondere des Extruders (6), aufweist, **dadurch gekennzeichnet, dass** zur Bewegung des Trägers (2) in zwei Bewegungsrichtungen jeweils mindestens zwei Antriebsmotoren (11) vorgesehen sind, so dass insgesamt mindestens vier Antriebsmotoren (11) zur Bewegung des Trägers (2) vorgesehen sind, wobei der Hubmechanismus (20) einen Hubschlitten (24) aufweist, wobei der Hubschlitten (24) an einer Führungsschiene (22, 23), insbesondere an zwei Führungsschienen (22, 23) geführt ist, wobei der Hubschlitten (24) über ein Umlenkmittel (27) mit mindestens einem Gegengewicht (25) verbunden ist, so dass das Eigengewicht des Hubschlittens (24) einschließlich der Bearbeitungsvorrichtung (15) zumindest teilweise entlastet ist.

**2.** Vorrichtung nach Anspruch 1, **dadurch gekennzeichnet, dass** die Antriebsmotoren (11) zur Bewegung des Trägers (2) jeweils ein Zahnrad (12) antreiben, wobei jedem Antriebsmotor (11) eine Zahnstange (13) zugeordnet ist, wobei das Zahnrad (12) in Eingriff mit der zugeordneten Zahnstange (13) steht.

**3.** Vorrichtung nach Anspruch 1 oder 2, **dadurch gekennzeichnet, dass** mindestens zwei sich quer zueinander erstreckende Führungsschienen (14) vorgesehen sind, wobei die beiden, einer Bewegungsrichtung des Trägers (2) zugeordneten Zahnstangen (13) jeweils über mindestens eine der Führungsschienen (14) miteinander verbunden sind, wobei der Träger (2) funktional wirksam mit einem Schlitten (15) verbunden ist, wobei der Schlitten (15) an den beiden sich quer zueinander erstreckenden Führungsschienen (14) geführt ist.

**5.** Vorrichtung nach einem der vorstehenden Ansprüche, **dadurch gekennzeichnet, dass** die Zahnstangen (13) des Trägers (2) jeweils über ein Lagergehäuse (17) mit den zugeordneten Führungsschienen (14) verbunden sind, wobei das Lagergehäuse (17) vorzugsweise mindestens ein Lager, insbesondere mindestens ein Gleitlager (18) aufweist, wobei das Lager bzw. das Gleitlager (18) sich parallel zu den Zahnstangen (13) erstreckt und an einer sich ebenfalls parallel zu der Zahnstange (13) erstreckenden Gleitschiene (19) geführt ist.

**6.** Vorrichtung nach einem der vorstehenden Ansprüche, **dadurch gekennzeichnet, dass** dem Hubmechanismus (20) mindestens einer der Antriebsmotoren (11) und eine Zahnstange (21) zugeordnet ist, wobei dieser Antriebsmotor (11) ein Zahnrad antreibt, wobei das Zahnrad in die zugeordnete Zahnstange (21) eingreift.

**7.** Vorrichtung nach einem der vorstehenden Ansprüche, **dadurch gekennzeichnet, dass** der Hubschlitten (24) den dem Hubmechanismus (20) zugeordneten Antriebsmotor (11) trägt, wobei die Zahnstange (21) sich im Wesentlichen ortsfest und parallel zu den Führungsschienen (22, 23) erstreckt.

**8.** Vorrichtung nach einem der vorstehenden Ansprüche, **dadurch gekennzeichnet, dass** der Träger (2) als Tisch (4) ausgebildet ist.

**9.** Vorrichtung nach einem der vorstehenden Ansprüche, **dadurch gekennzeichnet, dass** der Träger (2) mindestens eine beheizbare Platte (3), insbesondere eine Aluminiumplatte (28) aufweist.

**10.** Vorrichtung nach einem der vorstehenden Ansprüche, **dadurch gekennzeichnet, dass** der Träger (2) über Positioniermittel (31) in seiner Lage und relativ zum Schlitten (15) ausrichtbar ist.

**11.** Vorrichtung nach einem der vorstehenden Ansprüche, **dadurch gekennzeichnet, dass** eine Tragvorrichtung (32), insbesondere ein Gehäuse (33) vorgesehen ist, wobei die Tragvorrichtung (32) bzw. das Gehäuse (33) mehrere Profilstücke (34) aufweist, wobei die Profilstücke (34) über Verbindungselemente (35) miteinander verbunden sind.

**12.** Vorrichtung nach einem der vorstehenden Ansprüche, **dadurch gekennzeichnet, dass** die Profilstücke (34) und die Verbindungselemente (35) ineinander steckbar sind.

**13.** Vorrichtung nach einem der vorstehenden Ansprüche, **dadurch gekennzeichnet, dass** das Antriebssystem (10) mindestens einen Endschalter (39, 40, 41) aufweist, wobei der Endschalter (39, 40, 41) einer der Bewegungsrichtungen zugeordnet ist, wobei der Endschalter (39, 40, 41) das Antriebssystem (10) beim Erreichen ein- oder abschaltet.
